# EUROPÄISCHE PATENTSCHRIFT

(11) **EP 1 170 175 B1**
(45) Veröffentlichungstag und Bekanntmachung des Hinweises auf die Patenterteilung: **24.08.2005**
(21) Anmeldenummer: 01115050.5
(22) Anmeldetag: 21.06.2001
(51) Int. Cl.: B60R 1/076

(54) **Schwenkbarer Aussenspiegel für ein Kraftfahrzeug**
Foldable exterior rear view mirror for a vehicle
Rétroviseur extérieur rabattable pour un véhicule

(30) Priorität: 03.07.2000 DE 10031330
(43) Veröffentlichungstag der Anmeldung: 09.01.2002
(73) Patentinhaber: Magna Donnelly GmbH & Co. KG, 97904 Dorfprozelten (DE)
(72) Erfinder: Fuchs, Hans- Joachim, 97904 Dorfprozelten (DE); Weimer, Helmut, 97896 Kirschfurt (DE)
(74) Vertreter: Böck, Bernhard

(56) Entgegenhaltungen:
- DE-B- 1 755 577
- US-A- 3 889 915

## Beschreibung

Die Erfindung betrifft einen schwenkbar gelagerten Außenrückspiegel für ein Kraftfahrzeug nach dem Oberbegriff des Anspruchs 1.

Gattungsgemäße Außenrückspiegel, wie der in der US-A-3 889 915 offenbarte, schwenkbare Rückspiegel weisen einen Spiegelfuß und einen am Spiegelfuß um eine Schwenkachse schwenkbar befestigbaren Spiegelträger auf. Der Spiegelfuß kann dabei mit geeigneten Befestigungsmitteln am Fahrzeug befestigt werden und dient somit der Fixierung des Außenspiegels am Kraftfahrzeug. An dem schwenkbar gelagerten Spiegelträger können die verschiedenen für die Funktion eines Außenspiegels erforderlichen Bauteile, beispielsweise ein Spiegelelement, ein Verstellmechanismus, ein Verstellantrieb, eine Heizeinrichtung und ein Spiegelgehäuse, befestigt werden.

Aufgrund zulassungsrechtlicher Vorschriften ist eine schwenkbare Lagerung des Spiegelträgers auf dem Spiegelfuß bei modernen Kraftfahrzeugen zwingend erforderlich. Dies dient insbesondere der Verringerung der Verletzungsgefahr bei der Kollision eines Unfallopfers mit den von der Karosserie des Kraftfahrzeuges seitlich abstehenden Außenrückspiegeln.

Vor der Zulassung eines Außenspiegels wird deshalb beispielsweise ein sogenannter "Kinderkopf-Test" durchgeführt. Dabei wird ein Prüfkörper, der in Gewicht und Form den Maßen eines Kinderkopfes entspricht, zur Kollision mit dem Außenspiegel gebracht, wobei der Außenrückspiegel zum Bestehen des Testes durch den Aufprall zum Einklappen bringbar sein muss.

Aufgrund der schwenkbaren Lagerung des Spiegelträgers auf dem Spiegelfuß sind bei der Konstruktion eines Außenspiegels entgegengesetzte Zielvorgaben zu berücksichtigen. Einerseits soll der Spiegelträger möglichst ohne größeren Widerstand aus seiner Grundstellung in eine beigeklappte Stellung verschwenkbar sein, um so die Verletzungsgefahr zu verringern. Andererseits ist es im Betrieb des Außenspiegels erforderlich, dass der Spiegelträger möglichst fest mit dem Spiegelfuß verbunden ist, so dass eine unerwünschte Verstellung des Spiegelträgers, insbesondere durch Vibrationen, ausgeschlossen ist. Zur Lösung dieses Zielkonfliktes schlägt die US 4,728,181 die Verwendung eines elastisch gelagerten Rastelements zwischen Spiegelträger und Spiegelfuß vor. Durch dieses Rastelement wird die Lage des Spiegelträgers in einem definierten Schwenkwinkel, der gerade der Grundstellung des Außenspiegels zur Beobachtung des nachfolgenden Verkehrs entspricht, gesichert. Wirkt auf den Spiegelträger eine von vorne nach hinten bzw. entgegengesetzt gerichtete Kraft, so rastet das zwischen Spiegelträger und Spiegelfuß angeordnete Rastelement aus und erlaubt dadurch ein im Wesentlichen widerstandsfreies Verschwenken des Spiegelträgers.

Bei der Montage des Außenspiegels muss der Spiegelträger schwenkbar gelagert am Spiegelfuß befestigt werden. Zur Lösung dieser Befestigungsaufgabe ist beispielsweise aus der DE 28 50 164 A1 bekannt, am Spiegelträger einen Befestigungsbolzen vorzusehen, der durch eine am Spiegelfuß vorgesehene Öse durchgesteckt wird. Nach dem Durchstecken des Befestigungsbolzens durch die Öse wird am freien Ende des Befestigungsbolzens unter Zwischenlegung einer Feder eine Befestigungsschraube angebracht. Dadurch wird erreicht, dass der Spiegelträger mit seinem Befestigungsbolzen elastisch in der Öse des Spiegelfußes vorgespannt ist und gegen den Druck der Feder in Richtung der Schwenkachse verschoben werden kann. Durch diese axial in Richtung der Schwenkachse verschiebbare Lagerung des Spiegelträgers ist es möglich, zwischen Spiegelträger und Spiegelfuß Rastelemente anzuordnen, durch die der Spiegelträger in seiner Grundstellung gehalten wird. Sobald eine von vorne oder hinten gerichtete Kraft auf den Außenspiegel wirkt, rastet dieses Rastelement dadurch aus, dass aufgrund der durch die Kraft verursachten Schwenkbewegung der Spiegelträger in Richtung der Schwenkachse nach oben gedrückt wird und damit die Rastelemente außer Eingriff gebracht werden können. Nachteilig an dieser bekannten Konstruktion ist es, dass sie einen erheblichen baulichen Aufwand und eine relativ schwierige Montage erfordert.

Aus der EP 0 846 596 A2 ist ein besonders montagefreundlicher Außenrückspiegel bekannt. Zur Vereinfachung der Montage sind Spiegelfuß und Spiegelträger derart ausgebildet, dass der Spiegelfuß mit dem Spiegelträger verrastbar ist. Zur Befestigung des Spiegelträgers an dem Spiegelfuß können beispielsweise radialelastische Rasthaken am Spiegelträger vorgesehen sein, die mit einer in der Bauteilwandung des Spiegelfußes vorgesehenen Gegenrastung verrastbar sind. Nachteilig an dem aus der EP 0 846 596 A2 bekannten Außenspiegel ist es, dass die Lage zwischen Spiegelträger und Spiegelfuß nicht formschlüssig, beispielsweise durch ein Rastelement, sondern durch Reibschluss gesichert wird. Da die Reibung zwischen den am Spiegelträger und am Spiegelfuß vorgesehenen Reibflächen bestimmten Toleranzen unterworfen ist, ist eine zuverlässige Einstellung der zwischen Spiegelfuß und Spiegelträger wirkenden Reibkraft nicht möglich. Dadurch kann es vorkommen, dass der Spiegelträger entweder zu leicht verschwenkbar ist, so dass er beispielsweise bei Vibrationen aus der gewünschten Position auswandert, oder zu schwer verstellbar ist, so dass er beispielsweise den "Kinderkopf-Test" nicht besteht.

Aufgabe der vorliegenden Erfindung ist es, einen Außenspiegel zu schaffen, der einfach und kostengünstig herstellbar und montierbar ist und zugleich zuverlässig die Lage des schwenkbar gelagerten Spiegelträgers in zumindest einer Winkelstellung sichert.

Diese Aufgabe wird durch einen Außenspiegel mit den Merkmalen des Anspruchs 1 gelöst.

Vorteilhafte Ausführungsformen der Erfindung sind Gegenstand der Unteransprüche.

Erfindungsgemäß weist der Außenrückspiegel zumindest jeweils ein erstes und ein zweites Rastelement auf, wobei diese Rastelemente in gegenüberliegenden Rastkonturen verrastbar sind. Dabei ist es grundsätzlich gleichgültig, ob die Rastelemente oder die Rastkonturen am Spiegelfuß oder am Spiegelträger angeordnet sind. Das erste Rastelement mit der zugehörigen Rastkontur dient der Befestigung des Spiegelträgers auf dem Spiegelfuß, so dass der Spiegelträger durch Einrasten des Rastelements in der Rastkontur am Spiegelfuß schwenkbar gelagert montierbar ist. Das zweite Rastelement dient der Sicherung der Lage des Spiegelträgers relativ zum Spiegelfuß in zumindest einem definierten Schwenkwinkel durch formschlüssiges Einrasten des zweiten Rastelements in die zweite Rastkontur. Durch diese formschlüssige Lagesicherung ist ein ungewolltes Verschwenken des Spiegelträgers auch bei stärkeren Vibrationen zuverlässig ausgeschlossen. Erfindungsgemäß ist das erste Rastelement mit der zugehörigen Rastkontur derart ausgebildet, dass der Spiegelträger bei eingerastetem ersten Rastelement, d. h. ohne Lösung der Rastverbindung zwischen Spiegelträger und Spiegelfuß, in Richtung der Schwenkachse verschiebbar ist. Mit anderen Worten bedeutet dies, dass der Spiegelträger nicht nur um die Schwenkachse geschwenkt, sondern auch linear in Richtung der Schwenkachse verschoben werden kann. Das zweite Rastelement und die zugehörige zweite Rastkontur sind dabei derart ausgebildet, dass durch das Verschwenken des Spiegelträgers das zweite Rastelement außer Eingriff von der zweiten Rastkontur bringbar ist. Dieses Ausrasten des Formschlusses zwischen zweitem Rastelement und zweiter Rastkontur wird durch die in Richtung der Schwenkachse linear verschiebbare Lagerung des Spiegelträgers in einfacher Weise ermöglicht. Denn beispielsweise durch das leichte Anheben des Spiegelträgers relativ zum Spiegelfuß kann das zweite Rastelement außer Eingriff gebracht werden. Zugleich ist erfindungsgemäß am Außenrückspiegel ein Federelement vorgesehen, durch das der Spiegelträger gegen den Spiegelfuß gespannt wird. Zum Ausrasten des zweiten Rastelements muss der Spiegelträger gegen den Druck dieses Federelements in Richtung der Schwenkachse verschoben werden, so dass im Ergebnis ein ungewolltes Ausrasten des zweiten Rastelements, beispielsweise durch Vibrationen, zuverlässig ausgeschlossen ist.

Nach einer bevorzugten Ausführungsform der Erfindung weist das zweite Rastelement und/oder die zweite Rastkontur zumindest eine relativ zur Schwenkachse sich schräg von unten nach oben erstreckende Gleitfläche auf. Beim Ausrasten des zweiten Rastelements gleitet das zweite Rastelement auf dieser Gleitfläche in der Art der Bewegung auf einer schiefen Ebene stufenlos nach oben, so dass die zum Ausrasten des zweiten Rastelements erforderliche Kraft im Wesentlichen linear zunimmt. Sobald das Rastelement das obere Ende der Gleitfläche erreicht hat, ist es vollständig ausgerastet, so dass zum weiteren Verschwenken des Spiegelträgers nur noch eine relativ geringe Kraft erforderlich ist.

Das für die Funktion der erfindungsgemäßen Außenspiegels erforderliche Federelement kann selbstverständlich, wie aus dem Stand der Technik bekannt, als separates Bauteil, beispielsweise in der Art einer Schraubenfeder, ausgebildet sein. Um die Produktionskosten durch Einsparung von Bauteilen weiter zu senken, ist es besonders vorteilhaft, wenn das erste Rastelement im eingerasteten Zustand in der Art eines vorgespannten Federelements mit der ersten Rastkontur in Eingriff bringbar ist. Dadurch wird erreicht, dass das erste Rastelement im eingerasteten Zustand den Spiegelträger mit einer bestimmten Vorspannung elastisch gegen den Spiegelfuß spannt und so für den zuverlässigen Sitz des zweiten Rastelements in der zweiten Rastkontur sorgt. Mit anderen Worten bedeutet dies, dass durch Funktionsintegration der Spannfunktion in das Bauteil des ersten Rastelements ein separates Federelement einsparbar ist. Das erste Rastelement kann dazu beispielsweise elastisch am Spiegelfuß bzw. Spiegelträger angelenkt sein.

Vorzugsweise ist das erste Rastelement derart ausgebildet, dass durch eine Relativbewegung zwischen Spiegelträger und Spiegelfuß in Richtung der Schwenkachse eine entsprechende, entgegengesetzt gerichtete Rückstellkraft durch elastische Verformung des ersten Rastelements erzeugbar ist.

Erfindungsgemäß muss durch Einrasten des ersten Rastelements in der ersten Rastkontur einerseits der Spiegelträger sicher am Spiegelfuß befestigbar sein und andererseits eine lineare Verschiebbarkeit des Spiegelträgers in Richtung der Schwenkachse gewährleistet werden. Daraus folgt, dass das erste Rastelement in der ersten Rastkontur derart in Eingriff kommen muss, dass das erste Rastelement ohne Ausrasten aus der ersten Rastkontur relativ zur ersten Rastkontur verschiebbar ist. Dies kann insbesondere dadurch erreicht werden, dass zumindest einer der gegenüberliegenden Rastabschnitte des ersten Rastelements und/oder der ersten Rastkontur, die beim Verrasten am jeweils gegenüberliegenden Rastabschnitt zur Anlage kommen, sich in einer Bezugsebene erstreckt, die in einem Winkel von 1° bis 89° relativ zu den durch die Schwenkachse definierten Bezugsebenen verläuft. Als besonders günstig haben sich insbesondere Winkel von 40° bis 50° erwiesen. Durch die somit relativ zur Schwenkachse schräg verlaufende Anordnung der Rastabschnitte wird erreicht, dass die nach dem Einrasten aneinander zur Anlage gebrachten Rastabschnitte sich einerseits formschlüssig hintergreifen, um dadurch den Spiegelträger auf dem Spiegelfuß zu befestigen, und andererseits die Rastabschnitte im Falle einer axialen Relativbewegung zwischen erstem Rastelement und erster Rastkontur in der Art von einer oder zweier schiefer Ebenen aufeinander abgleiten können. Dabei muss selbstverständlich sichergestellt sein, dass das erste Rastelement und/oder die erste Rastkontur derart beweglich angeordnet bzw. verformbar ausgebildet sind, dass die zum Entlanggleiten der aufeinander anliegenden Rastabschnitte erforderliche Verschiebung bzw. Verformung ermöglicht wird.

Da es zur schwenkbaren Lagerung des Spiegelträgers am Spiegelfuß besonders einfach ist, kreissymmetrische Halteelemente, beispielsweise einen Haltebolzen oder eine Hülse, zu verwenden, kann der Rastabschnitt des ersten Rastelements und/oder der ersten Rastkontur besonders einfach durch einen zumindest abschnittsweise konisch ausgebildeten Wandungsabschnitt gebildet werden. Dabei ist es selbstverständlich ausreichend, wenn die konische Ausbildung des Wandungsabschnittes im Querschnitt nur bereichsweise vorhanden ist, beispielsweise im Bereich von vorstehenden Nasen.

Nach einer bevorzugten Ausführungsform der Erfindung ist das erste Rastelement in der Art einer Rastzunge ausgebildet. Dabei ist das erste Ende der Rastzunge elastisch federnd am Spiegelträger oder Spiegelfuß eingelenkt. Das zweite Ende der Rastzunge ist relativ zum Anlenkpunkt der Rastzunge verschiebbar und weist einen Rastabschnitt auf, der in die erste Rastkontur einrastbar ist. Derartige Rastzungen sind grundsätzlich aus dem Stand der Technik bekannt und funktionieren beim Einrasten in der Art, dass die Rastzunge zum Einrasten in Richtung ihrer Längserstreckung in die Rastkontur eingedrückt wird. Bei dieser Relativbewegung zwischen Rastzunge und Rastkontur wird das freie Ende der Rastzunge durch einen entsprechenden Vorsprung der Rastkontur so lange elastisch zur Seite gedrückt, bis der Rastabschnitt in die Rastkontur einrastet und dadurch die Rastzunge gegen ein unerwünschtes Zurückziehen sichert. Derartige Rastzungen können besonders einfach an aus Kunststoff gefertigten Spritzgussteilen vorgesehen werden.

Zur schwenkbaren Lagerung des Spiegelträgers am Spiegelfuß ist es vorteilhaft, wenn am Spiegelträger oder Spiegelfuß ein sich in Richtung der Schwenkachse erstreckendes, kreissymmetrisches Halteelement angeordnet ist. Dieses Halteelement kann beispielsweise in der Art eines Rohres, eines Bolzens oder einer Hülse ausgebildet sein. Bei der Befestigung des Spiegelträgers am Spiegelfuß wird das Halteelement mit seinem freien Ende in eine funktionskomplementär ausgebildete Ausnehmung eingefügt. Dabei ist es selbstverständlich gleichgültig, ob das Halteelement bzw. die Ausnehmung am Spiegelträger oder am Spiegelfuß angeordnet sind.

Zur Bildung der zur Befestigung des Spiegelträgers dienenden Rastzungen können vorzugsweise in der Mantelfläche einer als Halteelement dienenden Hülse im Wesentlichen U-förmige Einschnitte vorgesehen sein. Durch diese Einschnitte werden aus der Bauteilwandung der Hülse federnd angelenkte Rastzungen ausgeschnitten, wobei die elastischen Federeigenschaften der Rastzungen in diesem Fall im Wesentlichen vom Material und der Dimensionierung der Hülsenwandung abhängen. Derartige Einschnitte können entweder in eine vorhandene Hülse nachträglich eingebracht oder beispielsweise spritzgusstechnisch bei der Fertigung der Hülse in der Bauteilwandung vorgesehen werden.

Um einen im Wesentlichen vibrationsfreien Sitz des Spiegelträgers auf dem Spiegelfuß zu gewährleisten, muss der Spiegelträger auch in zur Schwenkachse radialer Richtung im Wesentlichen spielfrei geführt werden. Diese radiale Führung des Spiegelträgers kann zum einen durch das eingerastete erste Rastelement gewährleistet werden. Da die Lagerung des Spiegelträgers eine Führung in radialer Richtung jedoch an zumindest zwei Punkten erfordert, können vorzugsweise in der Ausnehmung zur Aufnahme des Halteelements Führungsflächen, insbesondere vorstehende Führungsnasen, vorgesehen sein. Diese Führungsflächen können von radial außen an dem kreissymmetrischen Halteelement zur Anlage gebracht werden, so dass das Halteelement, beispielsweise eine Hülse, in radialer Richtung abgestützt und dadurch spielfrei geführt ist.

Um ein übermäßiges Verschwenken des Spiegelträgers zu verhindern, bei dem der Außenrückspiegel beispielsweise in unerwünschter Weise gegen die Seitenscheiben des Fahrzeuges schlagen könnte, kann am Außenrückspiegel eine Schwenkbegrenzung vorgesehen sein. Diese Schwenkbegrenzung kann in der Form einer Nase ausgebildet werden, die in einer gegenüberliegenden Nut in Eingriff bringbar ist. Dabei ist es selbstverständlich gleichgültig, ob Nase bzw. Nut am Spiegelträger oder am Spiegelfuß angeordnet sind. Zur Begrenzung der Schwenkbewegung ist die Nut begrenzt, so dass die Nase an den Enden der Nut zur Anlage kommen kann und dadurch formschlüssig ein weiteres Verschwenken ausschließt.

Die Erfindung dient insbesondere der Fertigung von besonders preisgünstigen Außenspiegeln. Die Produktionskosten für derartige Spiegel lassen sich insbesondere dadurch reduzieren, dass Spiegelträger und/oder Spiegelfuß im Wesentlichen vollständig aus Kunststoff gefertigt sind. Insbesondere können Spiegelträger und/oder Spiegelfuß durch Spritzgießen hergestellt werden. Die elastischen Eigenschaften von Kunststoff lassen es insbesondere zu, das erste Rastelement, beispielsweise in der Form einer Rastzunge, ohne zusätzliche Federelemente elastisch federnd auszubilden.

Eine weitere Kostenreduktion lässt sich erreichen, wenn Spiegelträger und/oder Spiegelfuß im Wesentlichen einstückig ausgebildet sind.

Nachfolgend wird die Erfindung anhand lediglich einige bevorzugte Ausführungsformen darstellender Zeichnungen näher erläutert. Es zeigen:
- **Fig. 1**: eine erste Ausführungsform eines Spiegelfußes und eines teilweise dargestellten Spiegelträgers in perspektivischer Ansicht;
- **Fig. 2**: eine zweite Ausführungsform eines teilweise dargestellten Spiegelfußes und eines teilweise dargestellten Spiegelträgers im Querschnitt;
- **Fig. 3**: eine dritte Ausführungsform eines teilweise dargestellten Spiegelfußes und eines teilweise dargestellten Spiegelträgers im Querschnitt;
- **Fig. 4**: eine vierte Ausführungsform eines teilweise dargestellten Spiegelfußes und eines teilweise dargestellten Spiegelträgers im Querschnitt.

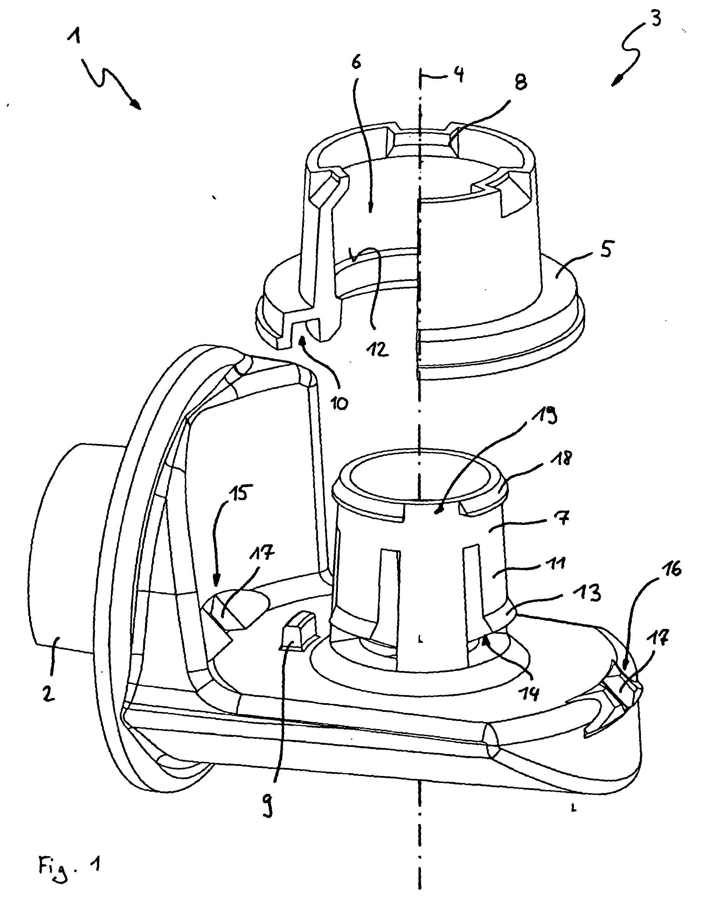

In **Fig. 1** ist ein einstückig aus Kunststoff durch Spritzguss herstellbarer Spiegelfuß 1 dargestellt, der mit einem Flansch 2 an der Karosserie eines nicht dargestellten Kraftfahrzeuges befestigbar ist. Auf dem Spiegelfuß 1 kann ein lediglich teilweise dargestellter Spiegelträger 3 um eine Schwenkachse 4 schwenkbar befestigt werden. Zum besseren Verständnis ist in **Fig. 1** vom Spiegelträger 3 lediglich ein Teil 5 dargestellt, das der Befestigung des Spiegelträgers 3 am Spiegelfuß 1 dient. Soweit der Spiegelträger 3 in **Fig. 1** nicht dargestellt ist, entspricht er den aus dem Stand der Technik bekannten Spiegelträgern. Dabei ist darauf hinzuweisen, dass das Teil 5 entweder einstückig in den Spiegelträger 3 integriert werden kann, so dass die in **Fig. 1** dargestellten Außenkontur des Teils 5 entfällt, oder dass das Teil 5 als separates Bauteil ausgebildet ist, das mit geeigneten Befestigungsmitteln an einem zweiten Teil des Spiegelträgers 3 befestigt wird.

Das Teil 5 des Spiegelträgers 3 weist eine kreissymmetrische Ausnehmung 6 auf, in die eine als Halteelement ausgebildeten Hülse 7, die am Spiegelfuß 1 angeformt ist, eingesteckt werden kann. Zur besseren Erkennbarkeit der Ausnehmung 6 ist das Teil 5 des Spiegelträgers 3 in **Fig. 1** aufgebrochen dargestellt.

Die Hülse 7 und die Ausnehmung 6 am Spiegelträger 3 sind dabei in Länge und Durchmesser in der Art funktionskomplementär ausgebildet, dass nach Befestigung des Teils 5 auf dem Spiegelfuß 1 eine Schwenkbewegung des Spiegelträgers 3 um die Schwenkachse 4 ermöglicht wird. Um einen im Wesentlichen spielfreien radialen Sitz des Teils 5 auf der Hülse 7 zu gewährleisten, sind am oberen Ende des Teils 5 drei Führungsnasen 8 angeformt, deren radial nach innen weisende Führungsflächen am oberen Umfang der Hülse 7 nach der Befestigung des Teils 5 zur Anlage kommen. Um die Schwenkbewegung des Spiegelträgers 3 um die Schwenkachse 4 zu begrenzen, ist am Spiegelfuß 1 eine Nase 9 angeformt, die in eine Nut 10 am Teil 5 des Spiegelträgers 3 eingreift. Die Nut 10 ist dabei an zwei Enden begrenzt, so dass die Nase 9 die Schwenkbewegung des Spiegelträgers 3 begrenzend an nicht dargestellten Endflächen zur Anlage bringbar ist.

In der Wandung der Hülse 7 sind drei U-förmige Einschnitte vorgesehen, durch die drei Rastzungen 11 gebildet werden. Die drei Rastzungen 11 wirken als drei erste Rastelemente und dienen der verrastbaren Befestigung des Spiegelträgers 3 am Spiegelfuß 1. Zur Verrastung des Teils 5 am Spiegelträger 3 ist in der Ausnehmung 6 ein konischer Wandungsabschnitt 12 vorgesehen, der von den freien Enden 13 der Rastzungen 11 einrastbar hintergriffen werden kann. An den freien Enden 13 der Rastzungen 11 sind dazu abschnittsweise konisch ausgebildete, nach unten weisende Rastabschnitte 14 vorgesehen, die an dem konischen Wandungsabschnitt 12 nach dem Einrasten des Teils 5 von oben zur Anlage kommen. Durch ihre Keilform an den freien Enden 13 gewährleisten die Rastzungen 11 einen im Wesentlichen spielfreien Sitz des Teils 5 in radialer Richtung. Durch die winkelige Anordnung der Bezugsebenen, die durch den Rastabschnitt 14 bzw. den konischen Wandungsabschnitt 12 definiert werden, relativ zu den Bezugsebenen, die durch die Schwenkachse 4 definiert werden, ist gewährleistet, dass das Teil 5 und damit der Spiegelträger 3 ohne Ausrasten der Rastzungen 11 zumindest geringfügig nach oben axial in Richtung der Schwenkachse 4 verschoben werden kann. Bei dieser Linearbewegung werden die freien Enden 13 der Rastzungen 11 durch den konischen Wandungsabschnitt 12 in der Ausnehmung 6 zunehmend radial nach innen gedrückt, wobei die elastisch federnde Anlenkung der Rastzungen 11 dieser radial nach innen gerichteten Bewegung der freien Enden 13 entgegenwirkt. Im Ergebnis wird dadurch erreicht, dass aufgrund der durch die Rastzungen 11 aufgebrachten Federkräfte das Teil 5 mit dem Spiegelträger 3 gegen den Spiegelfuß 1 nach unten vorgespannt wird und bei einer axialen Verschiebung in Richtung der Schwenkachse 4 die der Bewegung entgegengerichtete Federkraft mit zunehmender Auslenkung stufenlos größer wird. Mit anderen Worten bedeutet dies, dass die Rastzungen 11 einerseits für eine zuverlässige Verrastung des Teils 5 mit dem Spiegelträger 3 auf dem Spiegelfuß 1 sorgen und zugleich in der Art einer Druckfeder wirken, durch die das Teil 5 gegen den Spiegelfuß 1 gespannt wird.

Einander radial gegenüberliegend sind am Spiegelfuß 1 zwei Rastkonturen 15 und 16 angeordnet, in die zwei funktionskomplementär ausgebildete Rastelemente am Spiegelträger 3, die in **Fig. 1** nicht dargestellt sind, eingreifen können. Die Rastkonturen 15 und 16 weisen jeweils eine keilförmige Vertiefung auf, durch die jeweils zwei sich schräg von unten nach oben erstreckende Gleitflächen 17 gebildet werden, auf denen die Rastelemente am Spiegelträger 3 nach oben gleiten können. Die Rastkonturen 15 und 16 sind dabei so am Spiegelfuß 1 angeordnet, dass nach dem Einrasten der entsprechenden Rastelemente des Spiegelträgers 3 in den Rastkonturen 15 und 16 der Spiegelträger 3 in einer vordefinierten Grundstellung lagegesichert wird. Aufgrund der von den Rastzungen 11 aufgebrachten Vorspannung des Spiegelträgers 3 gegen den Spiegelfuß 1 ist gewährleistet, dass die Rastelemente am Spiegelträger 3 nicht ungewollt aus den Rastkonturen 15 und 16 ausrasten. Durch die axiale Verschiebbarkeit des Teils 5 mit dem daran befestigten Spiegelträger 3 ist dabei zugleich gewährleistet, dass bei Aufbringung einer bestimmten Kraft gegen den Spiegelträger 3 dieser aus der Grundstellung in eine beigeklappte Stellung geschwenkt wird. Denn durch die aufgebrachte Kraft werden die Rastelemente des Spiegelträgers 3 auf den Gleitflächen 17 mit zunehmendem Schwenkwinkel nach oben gedrückt, wobei die Vorspannkraft der Rastzungen 11 überwunden werden muss. Sobald die Rastelemente am Spiegelträger 3 am oberen Ende der Gleitflächen 17 an den Rastkonturen 15 und 16 angelangt sind, rastet das Rastelement aus und kann im Wesentlichen ohne größeren Widerstand um die Schwenkachse 4 verschwenkt werden. Nach dem Ausrasten des Spiegelträgers 3 kann durch ein Zurückschwenken des Spiegelträgers 3 erreicht werden, dass dieser wieder in seiner Grundstellung in den Rastkonturen 15 und 16 einrastet.

Am oberen Ende der Hülse 7 ist ein Sicherungsbund 18 angeformt. Duch den Sicherungsbund 18 wird ein ungewünschtes Lösen des Spiegelträgers 3 zuverlässig ausgeschlossen, da die Führungsnasen 8 nicht über den Sicherungsbund 18 hinweg abgezogen werden können. Zur Montage bzw. Demontage des Spiegelträgers 3 sind am Sicherungsbund 18 drei Unterbrechungen 19 vorgesehen, durch die die Führungsnasen 8 in einer bestimmten Winkelstellung des Spiegelträgers 3 hindurch abgezogen werden können.

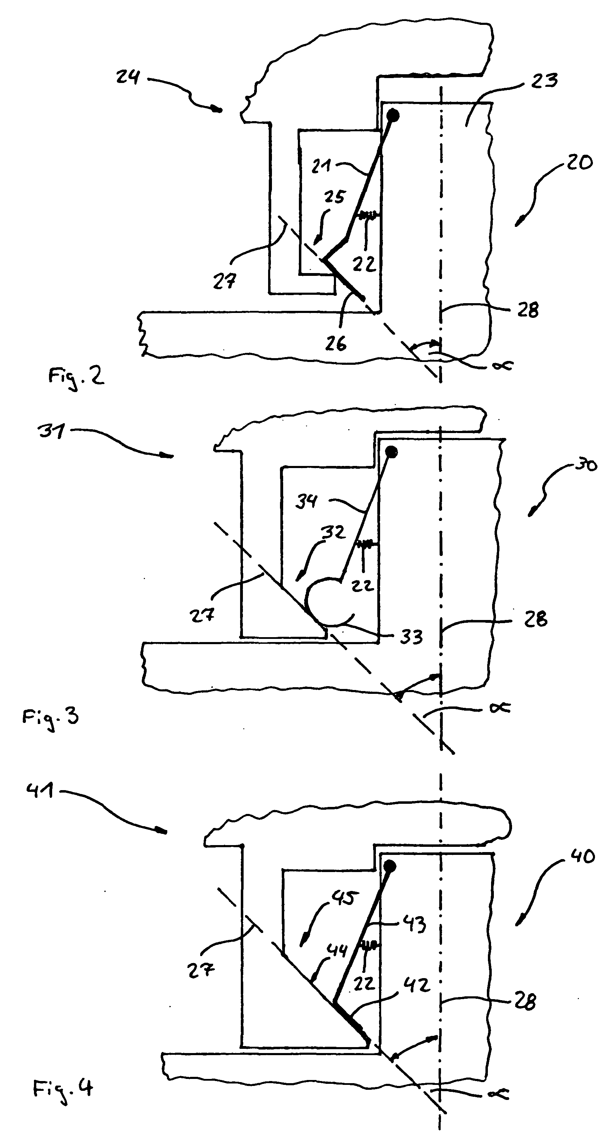

Die **Fig. 2, 3** und **4** zeigen in schematischer Darstellung verschiedene Möglichkeiten zur Ausbildung eines einrastbaren Lagersitzes zur Befestigung eines Spiegelträgers auf einem Spiegelfuß.

An dem in **Fig. 2** dargestellten Spiegelfuß 20 ist ein Rastelement 21 gelenkig angelenkt und mit einem Federelement 22 gegenüber dem Halteelement 23, das der Befestigung eines Spiegelträgers 24 dient, abgestützt. Am Spiegelträger 24 ist eine Rastkontur 25 vorgesehen, in die das Rastelement 21 zur Befestigung des Spiegelträgers 24 am Spiegelfuß 20 einrastbar ist. Der Rastabschnitt 26 am Rastelement 21 erstreckt sich dabei in einer Bezugsebene 27, die in einem Winkel α von 45° relativ zu den durch die Schwenkachse 28 definierten Bezugsebenen verläuft. Durch diesen Unterschied zwischen den Bezugsebenen vom Lagersitz zwischen Spiegelfuß 20 und Spiegelträger 24 einerseits und der Rastung zwischen dem Rastelement 21 und der Rastkontur 25 andererseits ist gewährleistet, dass der Spiegelträger 24 zumindest geringfügig ohne Ausrasten des Rastelements 21 axial in Richtung der Schwenkachse 28 nach oben verschiebbar ist. Außerdem wird durch den Unterschied zwischen den Bezugsebenen gewährleistet, dass der Spiegelträger 24 mit einer bestimmten Vorspannung gegen den Spiegelfuß 20 gezogen wird.

**Fig. 3** zeigt eine weitere mögliche Ausführungsform zur Verrastung eines Spiegelfußes 30 mit einem Spiegelträger 31. Man erkennt, dass hierbei die Rastkontur 32 am Spiegelträger 31 unter dem Winkel α relativ zu der Schwenkachse 28 verläuft, so dass der kreissymmetrisch ausgebildete Rastabschnitt 33 am freien Ende des Rastelements 34 von dem Federelement 22 angetrieben in der Rastkontur 32 nach oben und unten gleiten kann.

**Fig. 4** zeigt eine weitere Ausführungsform zur Verrastung eines Spiegelfußes 40 mit einem Spiegelträger 41. Man erkennt dabei, dass sowohl der Rastabschnitt 42 als auch die Rastkontur 45 unter einem Winkel α von ca. 45° relativ zu der Schwenkachse 28 verlaufen.

## Patentansprüche

1. Außenspiegel für ein Kraftfahrzeug mit einem am Fahrzeug befestigbaren Spiegelfuß (1, 20, 30, 40) und einem am Spiegelfuß (1, 20, 30, 40) um eine Schwenkachse (4) schwenkbar befestigbaren Spiegelträger (3, 24, 31, 41), wobei der Spiegelträger (3, 24, 31, 41) am Spiegelfuß (1, 20, 30, 40) durch Einrasten zumindest eines ersten Rastelements (11, 21, 34, 43) in einer ersten Rastkontur (12, 25, 32, 45) befestigbar ist, wobei
die Lage des Spiegelträgers (3, 24, 31, 41) relativ zum Spiegelfuß (1, 20, 30, 40) in zumindest einem definierten Schwenkwinkel durch Einrasten zumindest eines zweiten Rastelements in einer zweiten Rastkontur (15, 16) sicherbar ist, **dadurch gekennzeichnet, dass** der Spiegelträger (3, 24, 31, 41) bei eingerastetem ersten Rastelement (11, 21, 34, 43) gegen den Druck eines Federelements (11, 22) zumindest so weit in Richtung der Schwenkachse (4) verschiebbar ist, dass das zweite Rastelement durch Verschwenken des Spiegelträgers (3, 24, 31, 41) aus der zweiten Rastkontur (15, 16) ausrastbar ist.

2. Außenspiegel nach Anspruch 1,
**dadurch gekennzeichnet,**
**dass** das zweite Rastelement und/oder die zweite Rastkontur (15, 16) zumindest eine sich relativ zur Schwenkachse (4) schräg von unten nach oben erstreckende Gleitfläche (17) aufweist, durch die das zweite Rastelement beim Ausrasten in Richtung der Schwenkachse (4) gedrückt wird.

3. Außenspiegel nach Anspruch 1 oder 2,
**dadurch gekennzeichnet,**
**dass** das erste Rastelement (11, 21, 34, 43) im eingerasteten Zustand in der Art eines vorgespannten Federelements mit der ersten Rastkontur (12, 25, 32, 45) in Eingriff bringbar ist, so dass das erste Rastelement (11, 21, 34, 43) im eingerasteten Zustand den Spiegelträger (3, 24, 31, 41) mit einer bestimmten Vorspannung elastisch gegen den Spiegelfuß (1, 20, 30, 40) spannt.

4. Außenspiegel nach einem der Ansprüche 1 bis 3,
**dadurch gekennzeichnet,**
**dass** das erste Rastelement (11, 21, 34, 43) derart ausgebildet ist, dass durch eine Relativbewegung zwischen Spiegelträger (3, 24, 31, 41) und Spiegelfuß (1, 20, 30, 40) in Richtung der Schwenkachse (4, 28) eine entsprechende, entgegengesetzt gerichtete Rückstellkraft durch elastische Verformung eines Federelements (22), insbesondere des ersten Rastelements (11), erzeugbar ist.

5. Außenspiegel nach einem der Ansprüche 1 bis 4,
**dadurch gekennzeichnet,**
**dass** das erste Rastelement (11, 21, 34, 43) und die erste Rastkontur (12, 25, 32, 45) jeweils sich gegenüberliegende Rastabschnitte aufweisen, die beim Verrasten zur gegenseitigen Anlage kommen, wobei zumindest einer der gegenüberliegenden Rastabschnitte sich in einer Bezugsebene (27) erstreckt, die in einem Winkel α von 1° bis 89°, insbesondere in einem Winkel von 40° bis 50°, relativ zu den durch die Schwenkachse (4) definierten Bezugsebenen verläuft.

6. Außenspiegel nach einem der Ansprüche 1 bis 5,
**dadurch gekennzeichnet,**
**dass** der Rastabschnitt des ersten Rastelements (11) und/oder der erste Rastkontur (12) von einem zumindest abschnittsweise konisch ausgebildeten Wandungsabschnitt gebildet wird.

7. Außenspiegel nach einem der Ansprüche 1 bis 6,
**dadurch gekennzeichnet,**
**dass** das erste Rastelement in der Art einer Rastzunge (11) ausgebildet ist, deren erstes Ende elastisch federnd am Spiegelträger oder Spiegelfuß (1) angelenkt ist und an deren zweitem Ende (13) ein Rastabschnitt (14) angeordnet ist, der in die erste Rastkontur (12) einrastbar ist.

8. Außenspiegel nach einem der Ansprüche 1 bis 7,
**dadurch gekennzeichnet,**
**dass** am Spiegelträger oder Spiegelfuß (1) ein sich in Richtung der Schwenkachse (4) erstreckendes, kreissymmetrisches Halteelement, insbesondere in Form einer Hülse (7), angeordnet ist, das zur Befestigung des Spiegelträgers (3) am Spiegelfuß (1) mit seinem freien Ende in eine funktionskomplementär ausgebildete Ausnehmung (6) am Spiegelträger (3) oder Spiegelfuß einfügbar ist.

9. Außenspiegel nach Anspruch 8,
**dadurch gekennzeichnet,**
**dass** die Hülse in der Mantelfläche zumindest einen im Wesentlichen U-förmigen Einschnitt aufweist, so dass **dadurch** eine, insbesondere elastisch federnd angelenkte, Rastzunge (11) gebildet wird, die insbesondere im Bereich des freien Endes der Hülse (7) an der Hülse (7) angelenkt ist.

10. Außenspiegel nach Anspruch 8 oder 9,
**dadurch gekennzeichnet,**
**dass** die erste Rastkontur durch einen im Wesentlichen konisch ausgebildeten Wandungsabschnitt (12) in der Ausnehmung (6) am Spiegelträger (3) oder Spiegelfuß gebildet wird.

11. Außenspiegel nach einem der Ansprüche 8 bis 10,
**dadurch gekennzeichnet,**
**dass** in der Ausnehmung (6) zur Aufnahme des kreissymmetrischen Halteelements (7) Führungsflächen, insbesondere vorstehende Führungsnasen (8), angeordnet sind, mit denen die Schwenkbewegung des Spiegelträgers (3) auf dem Halteelement (7) in radialer Richtung im Wesentlichen spielfrei geführt werden kann.

12. Außenspiegel nach einem der Ansprüche 1 bis 11,
**dadurch gekennzeichnet,**
**dass** als Schwenkbegrenzung am Spiegelträger oder Spiegelfuß (1) zumindest eine vorspringende Nase angeordnet ist, die in einer gegenüberliegenden Nut (10) im Spiegelträger (3) in Eingriff bringbar ist, wobei die Nase (9) an den Enden der Nut (10) die Schwenkbewegung des Spiegelträgers (3) begrenzend zur Anlage bringbar ist.

13. Außenspiegel nach einem der Ansprüche 1 bis 12,
**dadurch gekennzeichnet,**
**dass** Spiegelträger (3) und/oder Spiegelfuß (1) im Wesentlichen vollständig aus Kunststoff, insbesondere in der Art von Spritzgussteilen, gefertigt sind.

14. Außenspiegel nach einem der Ansprüche 1 bis 13,
**dadurch gekennzeichnet,**
**dass** Spiegelträger und/oder Spiegelfuß (1) im Wesentlichen einstückig ausgebildet sind.

## Claims

1. Outside mirror for a motor vehicle comprising a mirror foot (1, 20, 30, 40) fastenable to the vehicle and a mirror carrier (3, 24, 31, 41) fastenable to the mirror foot (1, 20, 30, 40) so as to be capable of swivelling about a swivelling axis (4), wherein the mirror carrier (3, 24, 31, 41) is fastenable to the mirror foot (1, 20, 30, 40) by virtue of the latching of at least one first detent element (11, 21, 34, 43) in a first detent contour (12, 25, 32, 45), wherein the position of the mirror carrier (3, 24, 31, 41) relative to the mirror foot (1, 20, 30, 40) at at least one defined swivel angle may be secured by virtue of the latching of at least one second detent element in a second detent contour (15, 16),
**characterized in**
**that** the mirror carrier (3, 24, 31, 41) in the latched state of the first detent element (11, 21, 34, 43) is displaceable counter to the pressure of a spring element (11, 22) at least far enough in the direction of the swivelling axis (4) for the second detent element to be unlatchable from the second detent contour (15, 16) through swivelling of the mirror carrier (3, 24, 31, 41).

2. Outside mirror according to claim 1,
**characterized in**
**that** the second detent element and/or the second detent contour (15, 16) comprises at least one sliding surface (17), which extends obliquely from the bottom up relative to the swivelling axis (4) and by means of which the second detent element upon unlatching is pressed in the direction of the swivelling axis (4).

3. Outside mirror according to claim 1 or 2,
**characterized in**
**that** the first detent element (11, 21, 34, 43) in the latched state is movable in the manner of a preloaded spring element into engagement with the first detent contour (12, 25, 32, 45) so that the first detent element (11, 21, 34, 43) in the latched state braces the mirror carrier (3, 24, 31, 41) with a specific initial tension elastically against the mirror foot (1, 20, 30, 40).

4. Outside mirror according to one of claims 1 to 3,
**characterized in**
**that** the first detent element (11, 21, 34, 43) is designed in such a way that by virtue of a relative movement between mirror carrier (3, 24, 31, 41) and mirror foot (1, 20, 30, 40) in the direction of the swivelling axis (4, 28) a corresponding, oppositely directed restoring force may be generated through elastic deformation of a spring element (22), in particular of the first detent element (11).

5. Outside mirror according to one of claims 1 to 4,
**characterized in**
**that** the first detent element (11, 21, 34, 43) and the first detent contour (12, 25, 32, 45) comprise in each case mutually opposing detent portions which, during latching, come into mutual abutment, wherein at least one of the opposing detent portions extends in a reference plane (27), which extends at an angle α of 1° to 89°, in particular at an angle of 40° to 50°, relative to the reference planes defined by the swivelling axis (4).

6. Outside mirror according to one of claims 1 to 5,
**characterized in**
**that** the detent portion of the first detent element (11) and/or the first detent contour (12) is formed by an, at least in sections, conically designed wall portion.

7. Outside mirror according to one of claims 1 to 6,
**characterized in**
**that** the first detent element is designed in the manner of a detent tongue (11), the first end of which is coupled in an elastically sprung manner to the mirror carrier or mirror foot (1) and on the second end (13) of which a detent portion (14) is disposed, which is latchable into the first detent contour (12).

8. Outside mirror according to one of claims 1 to 7,
**characterized in**
**that** disposed on the mirror carrier or mirror foot (1) is a circular-symmetrical retaining element particularly in the form of a sleeve (7), which extends in the direction of the swivelling axis (4) and, for fastening the mirror carrier (3) to the mirror foot (1), is insertable by its free end into a functionally complementary recess (6) of the mirror carrier (3) or mirror foot.

9. Outside mirror according to claim 8,
**characterized in**
**that** the sleeve in the lateral surface has at least one substantially U-shaped notch, thereby forming a detent tongue (11), which is coupled in particular in an elastically sprung manner and is coupled in particular in the region of the free end of the sleeve (7) to the sleeve (7).

10. Outside mirror according to claim 8 or 9,
**characterized in**
**that** the first detent contour is formed by a substantially conically designed wall portion (12) in the recess (6) of the mirror carrier (3) or mirror foot.

11. Outside mirror according to one of claims 8 to 10,
**characterized in**
**that** disposed in the recess (6) for receiving the circular-symmetrical retaining element (7) are guide surfaces, in particular protruding guide lugs (8), by means of which the swivelling motion of the mirror carrier (3) on the retaining element (7) may be guided in radial direction substantially without play.

12. Outside mirror according to one of claims 1 to 11,
**characterized in**
**that** disposed as a swivelling limitation on the mirror carrier or mirror foot (1) is at least one protruding lug, which is movable into engagement in an opposing groove (10) in the mirror carrier (3), wherein the lug (9) for limiting the swivelling motion of the mirror carrier (3) is movable into contact with the ends of the groove (10).

13. Outside mirror according to one of claims 1 to 12,
**characterized in**
**that** mirror carrier (3) and/or mirror foot (1) are manufactured substantially completely from plastics material, in particular in the manner of injection-moulded parts.

14. Outside mirror according to one of claims 1 to 13,
**characterized in**
**that** mirror carrier and/or mirror foot (1) are of a substantially one-piece design.

## Revendications

1. Rétroviseur extérieur pour un véhicule automobile avec une embase de rétroviseur (1, 20, 30, 40) pouvant être fixée sur le véhicule et un support de rétroviseur (3, 24, 31, 41) pouvant être fixé sur l'embase de rétroviseur (1, 20, 30, 40) de façon à pouvoir pivoter autour d'un axe de pivotement (4), le support de rétroviseur (3, 24, 31, 41) pouvant être fixé sur l'embase de rétroviseur (1, 20, 30, 40) par l'enclenchement d'au moins un premier élément d'enclenchement (11, 21, 34, 43) dans un premier contour d'enclenchement (12, 25, 32, 45), la position du support de rétroviseur (3, 24, 31, 41) pouvant être bloquée par rapport à l'embase de rétroviseur (1, 20, 30, 40) dans au moins un angle de pivotement défini par l'enclenchement d'au moins un second élément d'enclenchement dans un second contour d'enclenchement (15, 16), **caractérisé en ce que** le support de rétroviseur (3, 24, 31,41) peut être déplacé, le premier élément d'enclenchement (11, 21, 34, 43) enclenché, contre la pression d'un élément de ressort (11, 22) au moins suffisamment en direction de l'axe de pivotement (4) pour que le second élément d'enclenchement puisse être désenclenché du second contour d'enclenchement (15, 16) par basculement du support de rétroviseur (3, 24, 31, 41).

2. Rétroviseur extérieur selon la revendication 1,
**caractérisé en ce que**
le second élément d'enclenchement et/ou le second contour d'enclenchement (15, 16) présente(nt) au moins une surface de glissement (17) s'étendant en biais du bas vers le haut par rapport à l'axe de pivotement (4), surface par laquelle le second élément d'enclenchement est pressé en direction de l'axe de pivotement (4) lors du désenclenchement.

3. Rétroviseur extérieur selon la revendication 1 ou 2,
**caractérisé en ce que**
le premier élément d'enclenchement (11, 21, 34, 43) peut être amené en prise dans l'état enclenché à la façon d'un élément de ressort pré-tendu avec le premier contour d'enclenchement (12, 25, 32, 45), de sorte que le premier élément d'enclenchement (11, 21, 34, 43) tend dans l'état enclenché le support de rétroviseur (3, 24, 31 41) avec une pré-tension définie, de façon élastique, contre l'embase de rétroviseur (1, 20, 30, 40).

4. Rétroviseur extérieur selon l'une quelconque des revendications 1 à 3,
**caractérisé en ce que**
le premier élément d'enclenchement (11, 21, 34, 43) est conçu de telle sorte que, par un déplacement relatif entre le support de rétroviseur (3, 24, 31, 41) et l'embase de rétroviseur (1, 20, 30, 40) en direction de l'axe de pivotement (4, 28), on peut générer une force de rappel appropriée et orientée dans le sens opposé par déformation élastique d'un élément de ressort (22), en particulier du premier élément d'enclenchement (11).

5. Rétroviseur extérieur selon l'une quelconque des revendications 1 à 4,
**caractérisé en ce que**
le premier élément d'enclenchement (11, 21, 34, 43) et le premier contour d'enclenchement (12, 25, 32, 45) présentent des parties d'enclenchement qui se font face, lesquelles viennent en appui réciproque lors de l'enclenchement, au moins l'une des parties d'enclenchement opposées s'étendant dans un plan de référence (27), qui s'étend avec un angle α de 1 ° à 89°, en particulier avec un angle de 40° à 50°, par rapport aux plans de référence définis par l'axe de pivotement (4).

6. Rétroviseur extérieur selon l'une quelconque des revendications 1 à 5,
**caractérisé en ce que**
la partie d'enclenchement du premier élément d'enclenchement (11) et/ou le premier contour d'enclenchement (12) est/sont formé(s) par une partie de paroi formée de façon conique au moins par tronçons.

7. Rétroviseur extérieur selon l'une quelconque des revendications 1 à 6,
**caractérisé en ce que**
le premier élément d'enclenchement est conçu à la façon d'une lame d'enclenchement (11), dont la première extrémité est articulée de façon élastique comme un ressort sur le support de rétroviseur ou l'embase de rétroviseur (1) et sur la seconde extrémité (13) de laquelle est disposée une partie d'enclenchement (14), qui peut être enclenchée dans le premier contour d'enclenchement (12).

8. Rétroviseur extérieur selon l'une quelconque des revendications 1 à 7,
**caractérisé en ce que**
sur le support de rétroviseur ou l'embase de rétroviseur (1) est disposé un élément de maintien s'étendant en direction de l'axe de pivotement (4), à symétrie circulaire, en particulier, sous la forme d'un manchon (7), qui, pour la fixation du support de rétroviseur (3) sur l'embase de rétroviseur (1), peut être insérée par son extrémité libre dans un évidement (6) conçu de façon fonctionnellement complémentaire sur le support de rétroviseur (3) ou l'embase de rétroviseur.

9. Rétroviseur extérieur selon la revendication 8,
**caractérisé en ce que**
le manchon présente dans la surface d'enveloppe au moins une entaille sensiblement en forme de U, de sorte que de ce fait on forme une lame d'enclenchement (11), articulée en particulier de façon élastique comme un ressort, qui est articulée en particulier dans la zone de l'extrémité libre du manchon (7) sur le manchon (7).

10. Rétroviseur extérieur selon la revendication 8 ou 9,
**caractérisé en ce que**
le premier contour d'enclenchement est formé par une partie de paroi (12) conçue de façon sensiblement conique dans l'évidement (6) sur le support de rétroviseur (3) ou l'embase de rétroviseur.

11. Rétroviseur extérieur selon l'une quelconque des revendications 8 à 10,
**caractérisé en ce que**
dans l'évidement (6) pour le logement de l'élément de maintien (7) à symétrie circulaire sont disposées des surfaces de guidage, en particulier des ergots de guidage (8) saillants, avec lesquels le mouvement de pivotement du support de miroir (3) peut être guidé sensiblement sans jeu sur l'élément de maintien (7) dans la direction radiale.

12. Rétroviseur extérieur selon l'une quelconque des revendications 1 à 11,
**caractérisé en ce que**
comme limitation de pivotement sur le support de rétroviseur ou sur l'embase de rétroviseur (1) est disposé au moins un ergot saillant, qui peut être amené en prise dans une rainure (10) opposée dans le support de rétroviseur (3), l'ergot (9) pouvant être amené en appui sur les extrémités de la rainure (10) en délimitant le mouvement de pivotement du support de rétroviseur (3).

13. Rétroviseur extérieur selon l'une quelconque des revendications 1 à 12,
**caractérisé en ce que**
le support de rétroviseur (3) et/ou l'embase de rétroviseur (1) sont fabriqués sensiblement complètement en matière synthétique, en particulier à la façon de pièces moulées par injection.

14. Rétroviseur extérieur selon l'une quelconque des revendications 1 à 13,
**caractérisé en ce que**
le support de rétroviseur et/ou la base de rétroviseur (1) sont conçus sensiblement en une seule pièce.
